(19) Europäisches Patentamt

European Patent Office

Office européen des brevets

(11) EP 0 678 713 B1

(12) **EUROPEAN PATENT SPECIFICATION**

(45) Date of publication and mention
of the grant of the patent:
**06.03.2002 Bulletin 2002/10**

(51) Int Cl.[7]: **F24F 5/00**, F24D 11/00

(21) Application number: **95302648.1**

(22) Date of filing: **20.04.1995**

(54) **Building structures and methods of controlling the temperature of an interior space defined by such structures**

Gebäudekonstruktionen und Verfahren zur Temperatursteuerung des Innenraums solcher Gebäude

Structures pour bâtiments et méthodes pour la commande de la température à l'intérieur d'un espace défini par ces structures

(84) Designated Contracting States:
**BE CH DE DK FR GB LI NL SE**

(30) Priority: **20.04.1994 GB 9407854**

(43) Date of publication of application:
**25.10.1995 Bulletin 1995/43**

(73) Proprietor: **Barnard, Nicholas Ian**
**Brentwood, Essex CM15 8RD (GB)**

(72) Inventor: **Barnard, Nicholas Ian**
**Brentwood, Essex CM15 8RD (GB)**

(74) Representative:
**Cross, Rupert Edward Blount et al**
**BOULT WADE TENNANT, Verulam Gardens 70**
**Gray's Inn Road**
**London WC1X 8BT (GB)**

(56) References cited:
**WO-A-92/17664**     **GB-A- 2 208 922**
**US-A- 4 124 062**     **US-A- 4 775 001**

**Description**

The present invention relates to building structures and to methods of controlling the temperature of an interior space defined by such structures.

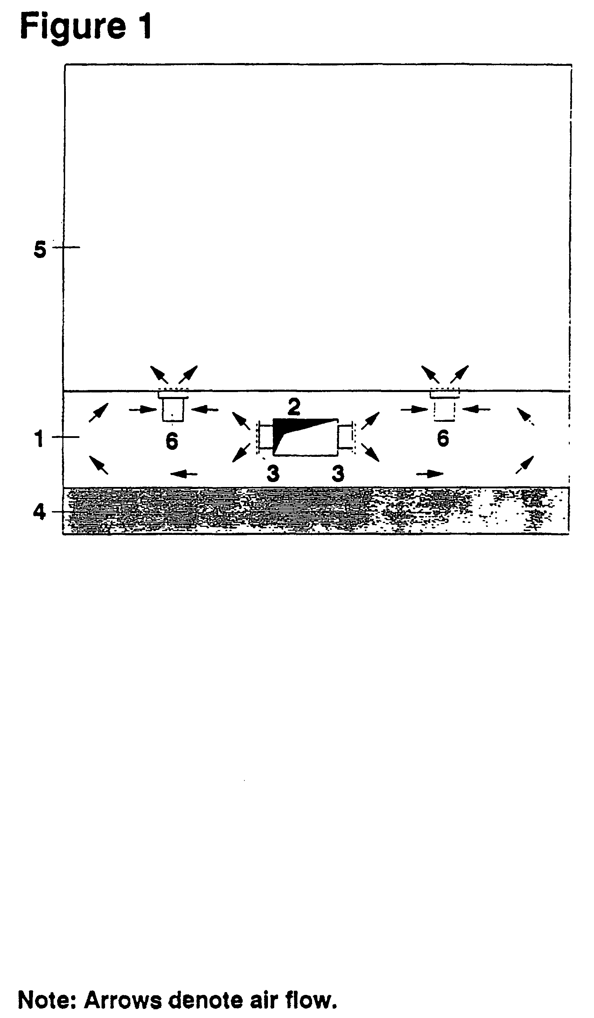

In modern buildings, thermally massive structural elements such as concrete slabs are increasingly being used in conjunction with mechanical ventilation and air conditioning systems to store heating and/or cooling energy. An example of a typical system is illustrated in Figure 1. Supply air is ducted into a false floor void 1. The air passes from the supply duct 2 into the void via transfer grilles 3, where it comes into thermal contact with an exposed surface of a concrete slab 4. Heat exchange takes place between the air and the slab before the air then passes from the pressurised void into a conditioned space 5 via diffusers 6. Air is subsequently extracted from the space by some other means (not shown) and either discharged or recirculated.

The system can be employed to make use of the "free" cooling which is available at night as a result low ambient temperatures. Cool outside air is circulated through the building at night, lowering the temperature of the slab as the air comes into thermal contact with it in the false floor void. This stored cooling is then available for use during the following day to cool warm daytime supply air as it comes into thermal contact with the exposed slab surface. The cooled air then passes into the conditioned space, offsetting heat gains.

In a similar manner, cooling generated by mechanical systems can also be stored in the building fabric. This has a number of benefits including:

- the ability to make increased use of off-peak electricity tariffs;
- facilitating load shifting to limit maximum demand and thereby reduce plant size; and
- increasing efficiency by enabling the operation of the cooling system during periods of low ambient temperature such as at night, rather than at the dictates of an applied load.

In a similar way heat energy can also be stored in the building fabric. The ability to facilitate load shifting and make increased use of off-peak tariffs is particularly beneficial where the heat energy is generated from electricity. Excess heat energy which might otherwise be wasted, including that from space heat gains and combined heat and power (CHP) machines, can be stored for later use.

In the illustrated example, the heat transfer between the air and the slab is predominantly via two routes. The first is by direct convective heat transfer between the air and the slab surface. The second is by convective heat transfer between the air and the underside of the false floor, in series with radiant heat transfer between the underside of the false floor and the slab. Both routes are reliant on convective heat transfer. Unfortunately however, this is generally poor.

As a consequence of poor convective heat transfer, the percentage of the heating/cooling energy actually transferred relative to that available for transfer is low, typically of the order of 50%. This ratio is termed the heat transfer effectiveness. As an example, if the slab were at 20°C and the supply air entered the void at 10°C, all of the cooling available would have been transferred if the supply air exited the void at the slab temperature of 20°C. However, with an effectiveness of 50%, the air will exit the void at an average temperature of 15°C and only half of the cooling available in the supply air will have been transferred to the slab. The remaining cooling is either discharged and wasted, or recirculated at the expense of fan energy.

Clearly increasing the surface convective heat transfer coefficient would improve the heat transfer effectiveness and charging/discharging performance. In addition to minimising heating/cooling wastage and fan energy consumption, this would also increase the maximum rate of heating/cooling output for the store and the amount of energy which could be stored in the slab over a given period.

Another problem associated with the illustrated system is that there is no control over when the store is used, ie when heat flow is allowed to take place either into or out of the slab. This is as a result of the inability to thermally isolate the building element from the supply air. In the illustrated example, the cooling energy stored in the slab overnight will start to leak out via heat exchange with the supply air as soon as the ventilation system becomes operational at the start of the following day. This will not only reduce the cooling available to meet peak heat gains (which normally do not occur until the afternoon) but may also, if heat gains are light during the early hours of occupancy, give rise to the need for additional heating to offset the cooling from the slab and to ensure that comfortable temperatures are maintained in the conditioned space.

One solution to the problem of lack of control is to utilise building elements having one or more preformed hollow cores as shown in GB-A-2,208,922 in which supply air is directed through a duct formed in a floor structure before then being fed into a conditioned space. In order to bring about effective heat transfer between the floor structure and the air, the duct is caused to follow a somewhat serpentine path which extends the heat transfer area. Means are also provided to selectively bypass a portion of the path thereby enabling the effective length of the duct to be altered. In this way the air which is fed into the conditioned space may be exposed to one of two different quantities of heat transfer for a given slab temperature depending on the length of the path travelled by the air. A similar system is discussed in US 4124062.

WO92/17664 describes the construction of various building parts for houses. The parts take the form of composite panels having air passages incorporated therein for the distribution and transfer of heat energy.

Clearly one of the drawbacks of a system which is dependent upon the provision of building elements having one or more hollow ducts is that such a system would be impracticable, if not impossible, to retrofit within an existing building structure.

The present invention seeks to address the problems of the prior art. To this end, particular embodiments of the invention provide a means of enhancing heat transfer efficiency between the air and the building fabric, while other embodiments facilitate the control of heat flow both into and out of the building elements concerned.

According to a first aspect of the present invention there is provided a building structure comprising at least one thermally massive structural first element of a first material, said structure defining at least one interior space separated from said first element by a false floor void, wall cavity or false ceiling void, said void or cavity being defined by a second element being a false floor, wall leaf or false ceiling respectively, the building structure being characterised in that it further comprises: a non-structural third element of a second material, the third element being located within said void or cavity at a surface of said first element to define a heat exchange air path therebetween; and means for selectively directing air along said path, the air, when so selected, being directed along said path either before or after passing into said interior space. In this way not only can air from an external source be warmed or cooled before being introduced to the interior space but air from the interior space can also be extracted and either warmed or cooled before being recirculated or discharged elsewhere.

Advantageously, the means for selectively directing air along the path, may include means defining a second path for the passage of air either into or out of the interior space, and means for selectively directing at least a proportion of the air along said second path, said second path being thermally isolated from the thermally massive structural first element. Preferably, means are also included for mixing the air exiting from said first and second paths prior to the passing of the air into the interior space.

Advantageously, the second path may in part be defined by a surface of the non-structural third element remote from the thermally massive structural first element. In such cases, the non-structural third element is preferably formed of or includes a material or materials having a lower thermal conductivity than the material from which the thermally massive structural first element is formed to provide insulation.

Advantageously, the means for selectively directing air along said heat exchange path may be adapted to direct sufficient air along the path such that the air passing into the interior space is of a predetermined temperature.

Advantageously, profile means may be provided on one or both of the structural first and non-structural third elements, the profile means extending generally transversely of the heat exchange air path to direct the air into thermal contact with the thermally massive structural first element. In one arrangement, the profile means may be formed on a surface of the non-structural third element, said surface, in use, being disposed in face-to-face relationship with a surface of the structural first element and the profile means serving as separators between the two.

In an alternative arrangement, an open matrix or similar filler may be disposed along the heat exchange air path to increase the turbulence of the air directed therealong.

Advantageously, one or more surfaces of the structural first element opposed to that at which the non-structural third element is located may be thermally insulated.

Advantageously, a further non-structural element may be located at a surface of the structural first element opposed to that at which said non-structural third element is located, the further non-structural element defining with the structural first element a further heat exchange air path therebetween.

Advantageously, heating and/or cooling energy may be transferred to the structural first element by means of air directed along one of said first or further heat exchange air paths and extracted by means of air directed along the other of said heat exchange air paths.

Advantageously, the air exiting from the further heat exchange air path may be discharged without entering said interior space.

Advantageously, the structural first element may comprise at least a part of a wall, floor or ceiling of the interior space.

Advantageously, the structural first element may be thermally connected to the earth.

Advantageously, the structural first element may be formed of a material incorporating a phase change material or which is included in the list comprising concrete, brick and steel.

Advantageously, the non-structural third element may be formed of a material included in the list comprising PVC, expanded polystyrene, closed cell foamed plastics, metal, wood, plasterboard and rock wool.

Advantageously, electrical, mechanical or fossil fuel based means may be provided for selectively raising or lowering the temperature of one or both of the structural first and non-structural third elements.

According to a second aspect of the present invention there is provided a method of controlling the temperature of an interior space defined by a building structure including at least one thermally massive structural first element, the interior space being separated from said first element by a false floor void, wall cavity or false ceiling void, said void or cavity being defined by a second element being a false floor, wall leaf or false ceiling respectively, the method comprising the steps of providing a non-structural third element in said void or cavity, at a surface of said first element so as to define a heat exchange air path therebetween; and selectively directing air along said path either before or after passing the air into said interior space.

Advantageously, the method may comprise the additional steps of providing a second path for the passage of air either into or out of the interior space, said second path being thermally isolated from said thermally massive structural first element, and selectively directing at least a proportion of the air along said second path.

A number of embodiments of the present invention will now be described by way of example with reference to the accompanying drawings in which:

Figure 2A is a cross-sectional elevational view of a first embodiment of a non-structural element in combination with a thermally massive structural element, the combination comprising part of a building structure in accordance with a first aspect of the present invention;

Figure 2B is a cross-sectional view of the combination of Figure 2A taken along the line B-B;

Figure 3A is a cross-sectional elevational view of a second embodiment of a non-structural element in combination with a thermally massive structural element, the combination forming part of a building structure in accordance with a first aspect of the present invention;

Figure 3B is a cross-sectional view of the combination of Figure 3A taken along the line B-B;

Figure 3C is a cross-sectional view of the combination of Figure 3A taken along the line C-C;

Figure 4A is a cross-sectional elevational view of a third embodiment of a non-structural element in combination with a thermally massive structural element, the combination forming part of a building structure in accordance with a first aspect of the present invention;

Figure 4B is a cross-sectional view of the combination of Figure 4A taken along the line B-B;

Figure 4C is a cross-sectional view of the combination of Figure 4A taken along the line C-C;

Figure 5A is a cross-sectional elevational view of a building structure in accordance with a first aspect of the present invention in which supply air is directed into an interior space via a heat exchange air path defined between the non-structural element and the thermally massive structural element;

Figure 5B is a cross-sectional view of the building structure of Figure 5A taken along the line B-B;

Figure 6A is a cross-sectional elevational view of a building structure in accordance with a first aspect of the present invention in which supply air is directed into an interior space via a path which is isolated from the thermally massive structural element;

Figure 6B is a cross-sectional view of the building structure of Figure 6A taken along the line B-B;

Figure 7A is a cross-sectional elevational view of a further building structure in accordance with a first aspect of the present invention in which supply air is directed into an interior space via either a heat exchange air path defined between the non-structural element and the thermally massive structural element or by a second path which is isolated from the thermally massive structural element;

Figure 7B is a cross-sectional view of the building structure of Figure 6A taken along the line B-B;

Figure 8A is a cross-sectional elevational view of a part of a building structure comprising a false floor void and a false ceiling void with a thermally massive structural element interposed between the two;

Figure 8B is a cross-sectional view of the part of the building structure of Figure 8A taken along the line B-B;

Figure 9A is a cross-sectional elevational view of a part of a building structure including a false floor void, not embodying the invention;

Figure 9B is a cross-sectional view of the part of the building structure of Figure 9A taken along the line B-B;

Figure 10 is a cross-sectional elevational view of a part of a building structure including a false floor void and false ceiling void with a thermally massive structural element interposed between the two, not embodying the invention;

Figure 11A is a cross-sectional elevational view of a part of a building structure including a false floor void;

Figure 11B is a cross-sectional view of the part of the building structure of Figure 11A taken along the line B-B;

Figure 12 is a cross-sectional elevational view of a wall of a building structure;

Figure 13A is a cross-sectional plan view of a building element having one or more hollow cores formed therein; not being an embodiment of the invention;

Figure 13B is a cross-sectional view of the building element of Figure 13A taken along the line B-B;

Figure 14A is a cross-sectional plan view of a further building element having one or more hollow cores formed therein; not being an embodiment of the invention; and

Figure 14B is a cross-sectional view of the building element of Figure 14A taken along the line B-B;

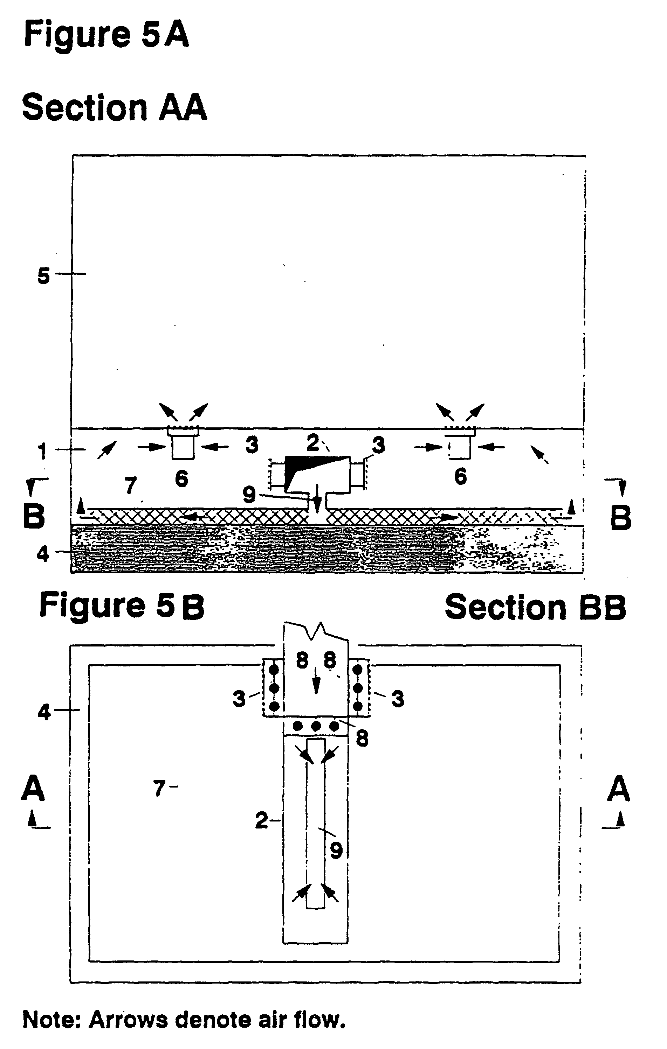

Referring to Figure 5A there is shown an interior or conditioned space 5 within a building structure, the interior space being in part defined by a floor. The floor is spaced from an underlying structural element 4 and so defines with the structural element a false floor void 1. Within the false floor void 1 there is disposed a duct 2 for the supply of air to the void and one or more diffusers 6 to allow the supplied air to pass from the false floor void into the interior space 5. A non-structural element 7 is located at an upper surface of the structural element 4 and defines a heat exchange air path therebetween. Air from the supply duct 2 is communicated to the air path by means of a connector 9 or is else discharged into the region of the false floor void 1 above the non-structural element 7 via transfer grilles 3. The air that is communicated to the air path exits into the remainder of the false floor void 1 around the edges of the upper surface of the non-structural element 7.

The non-structural element 7 may be in the form of sheeting which is placed, weighted or otherwise fixed onto the surface of the structural element 4 such that air can flow between the sheeting and the surface. Along the path thus formed, heat transfer between the air and the surface of the structural element 4 may be enhanced by increasing the air turbulence and hence the convective heat transfer. This may be achieved in a number of ways including the roughening of, or the provision of protrusions from, or fixings to, the surface of the sheeting and/or structural element hereinafter referred to as profiling. In addition to increasing absolute surface roughness, roughening can also be achieved by narrowing the air flow gap between the sheeting and the surface. This increases the relative roughness of the surface in comparison with the width of the flow gap, thus increasing the turbulence of the air flow. Alternatively, an open matrix or similar filler may be inserted between the sheeting and the structural element.

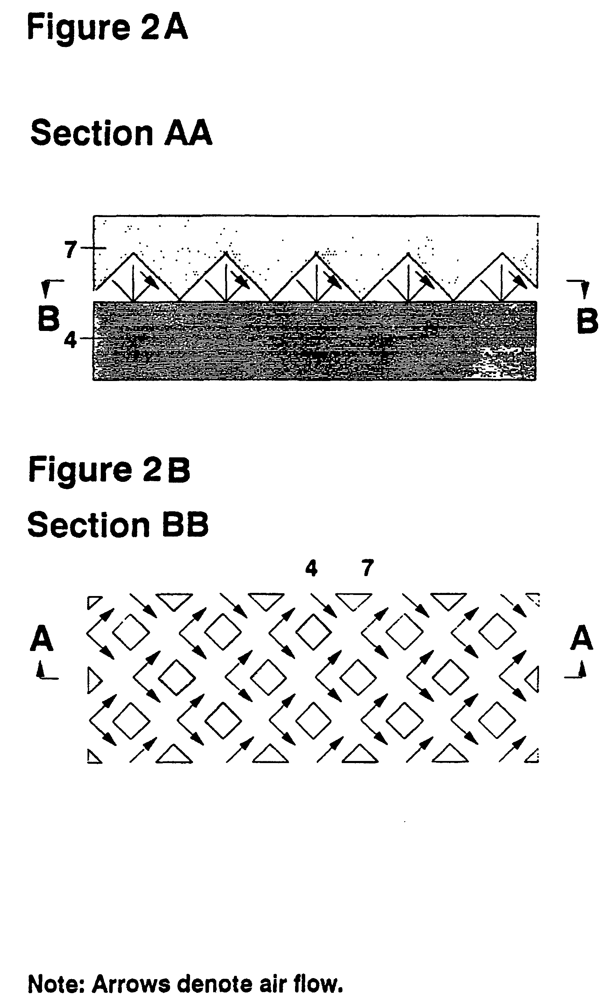

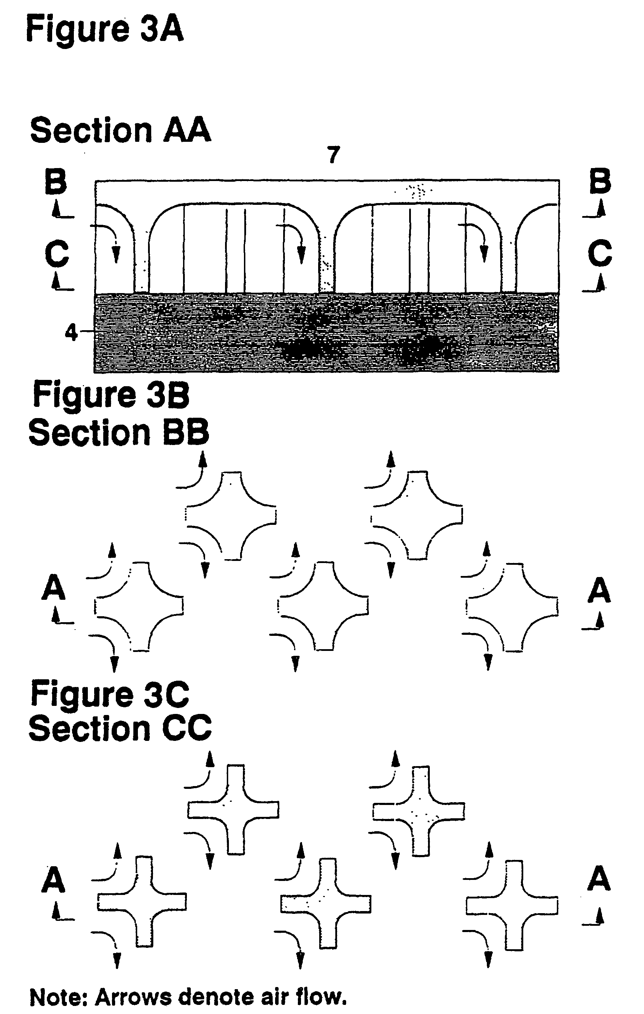

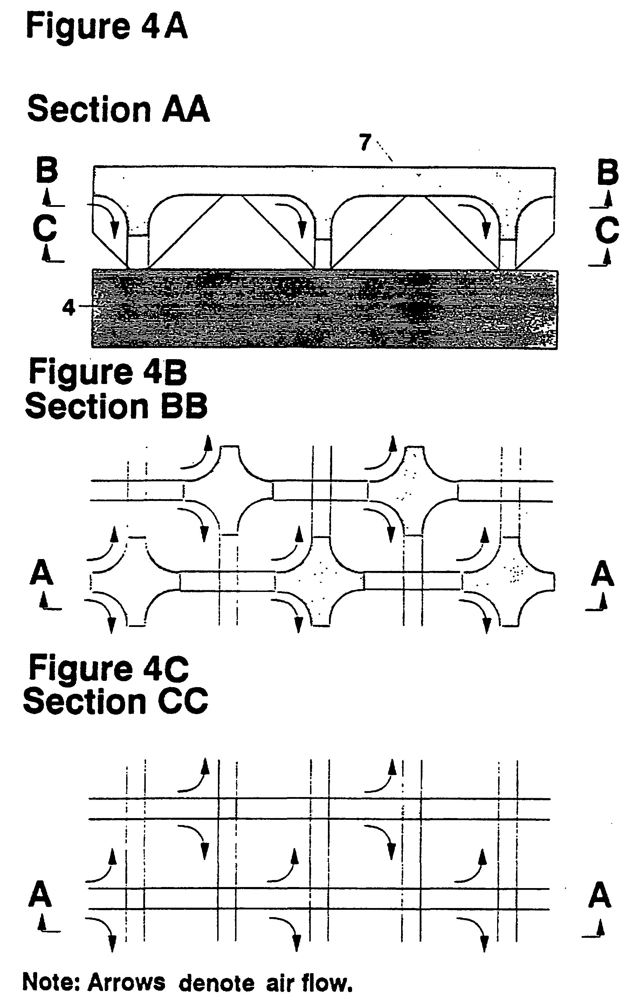

Figure 2, 3 and 4 show examples of profiling applied to the non-structural element 7. In each case, the air passing along the air path is turned towards the surface of the structural element by the profiling to produce a scouring of the surface by the air to give a high rate of convective heat transfer. There are many ways in which this may be achieved and the air turbulence increased. Accordingly, the present invention is not restricted to the examples given.

The spacing between the non-structural element 7 and the surface of the structural element 4 which gives rise to the air path may be provided inherently by the measure adopted to enhance heat transfer or may formed by alternative means, such as the use of separators.

As is well known, pressure drop and heat transfer are linked by the common underlying mechanism of turbulent air movement. (This is expressed theoretically by the "Reynolds- Colburn analogy" - for which see "Heat Transfer" by J.P.Holman). Accordingly, the penalty of increasing the turbulence of the air to enhance heat transfer is an increase in the differential pressure and hence of the fan energy required to drive the air movement. Any profiling of either the structural or non-structural elements should therefore be designed so that a reasonable balance is struck between heat transfer enhancement and fan energy consumption.

"Admittance" values as defined in the A3 guide of the Chartered Institute of Building Services Engineers are a measure of the conductivity of a material under dynamic heat flow conditions. For a 24 hour charge/discharge cycle a dense concrete slab will typically have an admittance value $Y_c$ of 10 to 20 W/m²K. This compares with a surface convective heat transfer coefficient $h_s$ which is normally in the region of 1 to 2 W/m²K. The overall heat transfer coefficient $h_{ac}$ between the air and the concrete ($h_s$ and $Y_c$ in series) can be approximated by:

$$h_{ac} = (h_s * Y_c)/(h_s + Y_c)$$

Normally $h_s << Y_c$ so that $h_{ac}$ approximates to $h_s$, and the surface convective heat transfer coefficient governs the heat transfer. The use of profiling to increase $h_s$ may therefore be expected to increase the overall heat transfer. However, the improvement obtained will diminish as $h_s$ increases, particularly when $h_s$ exceeds $Y_c$ and $Y_c$ becomes the dominant factor governing heat transfer. For example, increasing $h_s$ from $Y_c$ to $2Y_c$ will produce a 33% improvement in $h_{ac}$. However, further increases to $3Y_c$ and $4Y_c$ will only produce improvements of 12% and 7% respectively. Furthermore, the fan energy consumed by the heat transfer process will increase in proportion to $h_s$. Thus there is a diminishing improvement in heat transfer performance to fan energy consumed. The point at which the benefit of improved heat transfer becomes outweighed by the increase in fan energy will vary from installation to installation, although a value of $h_s$ between $2Y_c$ and $4Y_c$ can be expected to represent a reasonable compromise in most cases.

The system illustrated in Figures 5A and 5B may operate in conjunction with control dampers 8. Thus, when charging or discharging energy, a number of dampers 8 may be positioned such that supply air is circulated between the non-structural element 7 and the building fabric surface. Air passes from the supply duct 2 to the heat exchange path via the connector 9 and enhanced heat transfer takes place between the air and the slab surface, providing an increased heat transfer effectiveness and charging/discharging performance.

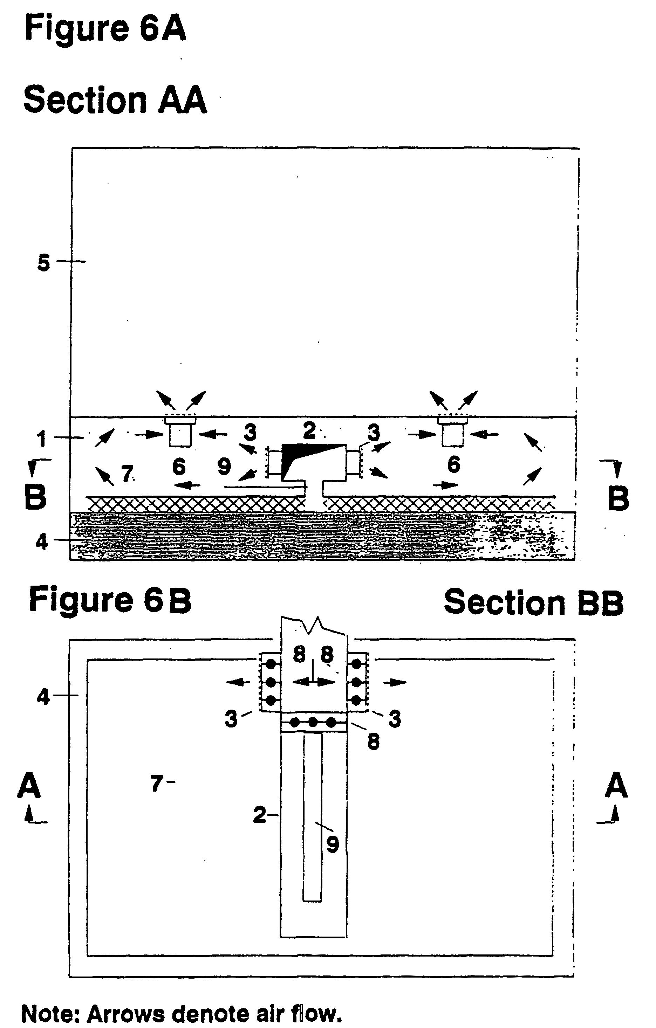

Conversely when storing energy, no air is circulated between the non-structural element 7 and the building fabric surface. Instead the dampers 8 are positioned such that the air is passed through the floor void 1 above the sheeting 7 as shown in Figures 6A and 6B. The sheeting with the layer of trapped air below insulates the structural element from the supply air, achieving thermal isolation and facilitating control over when the store is used.

Partial charging or discharging may be achieved by modulation of the dampers 8.

The amount of stored energy which will leak out of the bottom surface of the slab will depend on the slab thickness and conductivity together with the length of the storage/discharge cycle, typically one day. In some cases it may be desirable to prevent leakage by insulating the bottom surface. In others, the additional heat transfer at this surface may be beneficial in terms of maintaining comfortable conditions on the floor below. Slabs which are thermally connected to the earth represent a special case with higher than normal thermal storage capacity and the ability to self-cool by ground conduction. The illustrated embodiment provides a means of control over even this source of cooling.

A corresponding arrangement may find use in like manner in ceiling void supply systems.

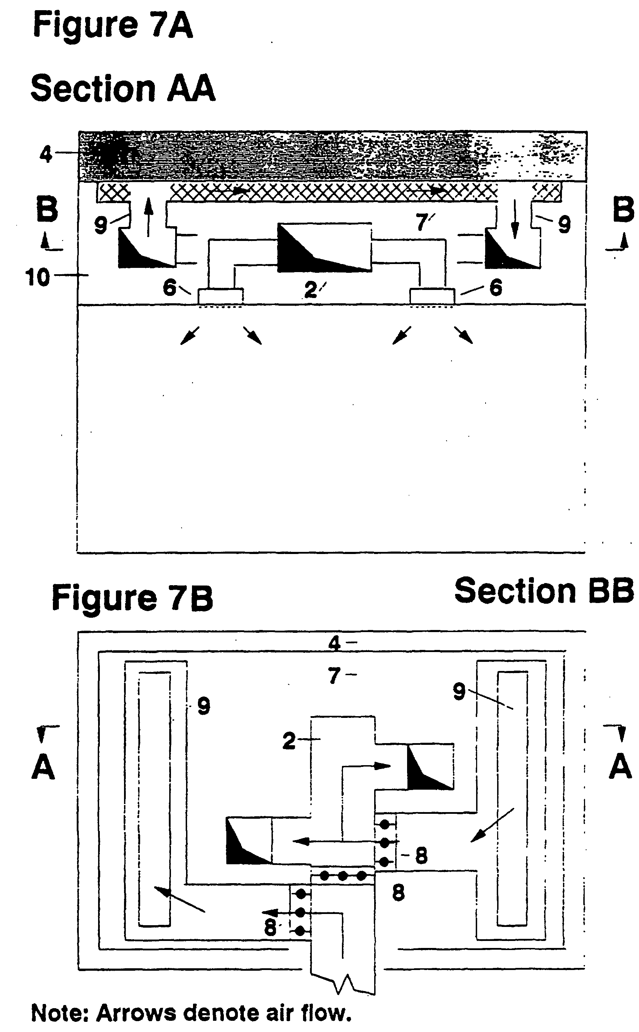

The system configuration described thus far makes use of ducted air entry to the heat exchange path, with air exiting around the edges into the floor void. A more appropriate arrangement, particularly for ducted ceiling supply systems, may be to seal the edges of the sheeting by, for example, the use of ducting tape, and have both air entry and exit ducted within the ceiling void. As can be seen from the example shown in Figures 7A and 7B, dampers 8 can then be used to circulate air under the sheeting or via a bypass with the damper positions reversed. A corresponding arrangement may find use in like manner in ducted floor supply systems.

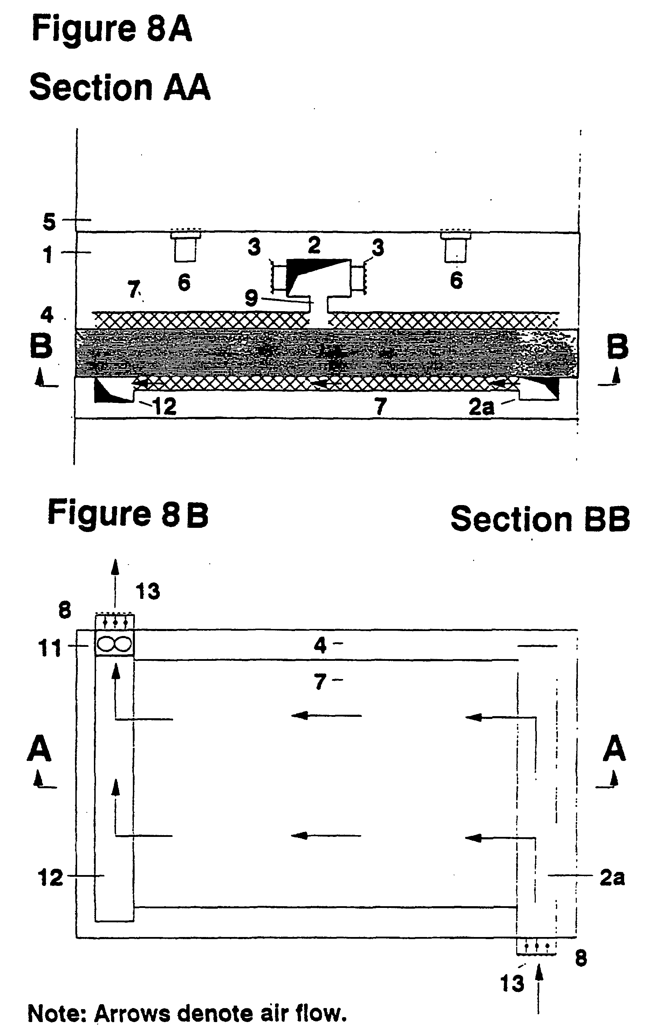

An arrangement with a non-structural element located at both the top and bottom slab surfaces is shown in Figures 8A and 8B. Night cooling of the slab is performed by a dedicated system circulating the air under a sheeting on the bottom of the slab. The cooling is extracted from the top of the slab during the day by a ventilation system similar to that already described. The reverse is also possible, with night cooling provided to the top of the slab and extracted from the bottom. The benefit of this arrangement is that the night cooling air path is separate from the normal ventilation system, resulting in a reduction in fan energy consumption. This is because in the normal ventilation system, a large proportion of the fan energy is expended in passing the air through filters, heating coils, cooling coils, and the like. By contrast no heating or cooling, and only minimal filtration will be required in the dedicated night cooling system.

Having said that, an additional fan will generally be required for the night cooling system. However, this will preferably take the form of an extract fan 11 to draw the air through under the sheeting. In this way, the heat pick-up from the fan will occur after the air has passed under the sheeting and not affect the cooling available from the air. If a supply fan were to be used, the heat pick-up from the fan would occur before the air passes under the sheeting. This would increase the temperature of the air and consequently reduce the cooling available from it.

The supply duct 2a and extract duct 12 are configured in a reverse return arrangement to facilitate good air distribution under the sheeting. Dampers 8 and louvres 13 are shown on the intake and discharge.

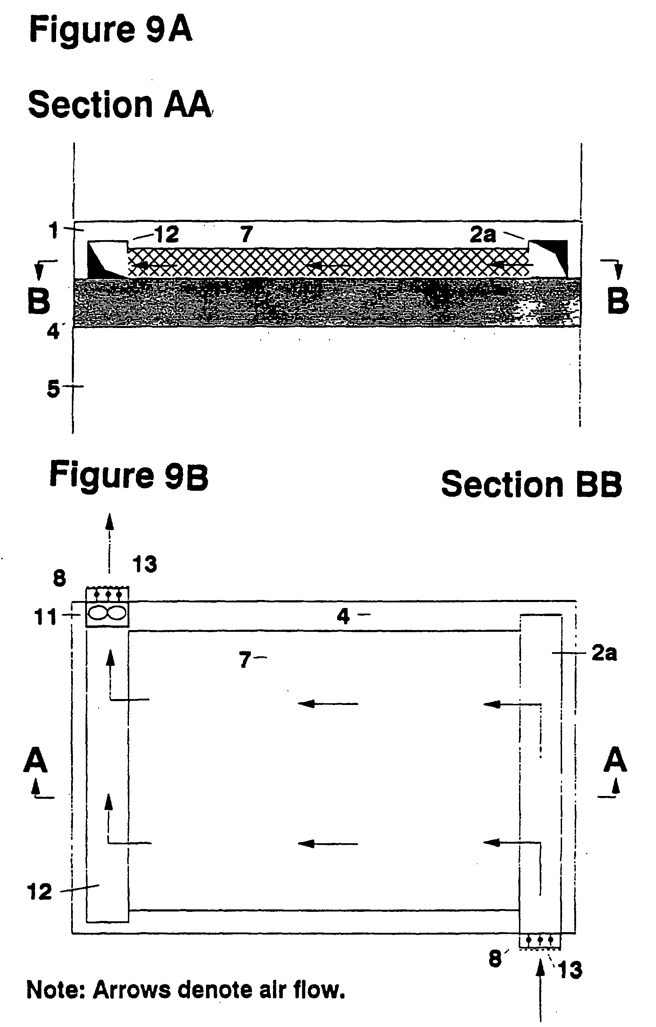

In another arrangement, which does not embody the invention, the non-structural element may be used to form a dedicated night cooling air path with enhanced heat transfer across the top surface of the slab as shown in Figures 9A and 9B. The bottom surface of the slab may be left exposed to the interior space below in which case the cooling stored in the slab overnight would enter the space via this exposed surface. The reverse of this arrangement is also possible, with night cooling of the bottom surface providing a cool floor surface, the floor surface being either directly exposed to the space or else designed to operate in conjunction with a conventional false floor supply system as illustrated in Figure 1. Although in this arrangement there is limited control over when the cooling is supplied to the space, the fan energy consumed in operating the systems will be minimal for the reasons noted in the above example, in that no heating or cooling and only minimal filtration are required.

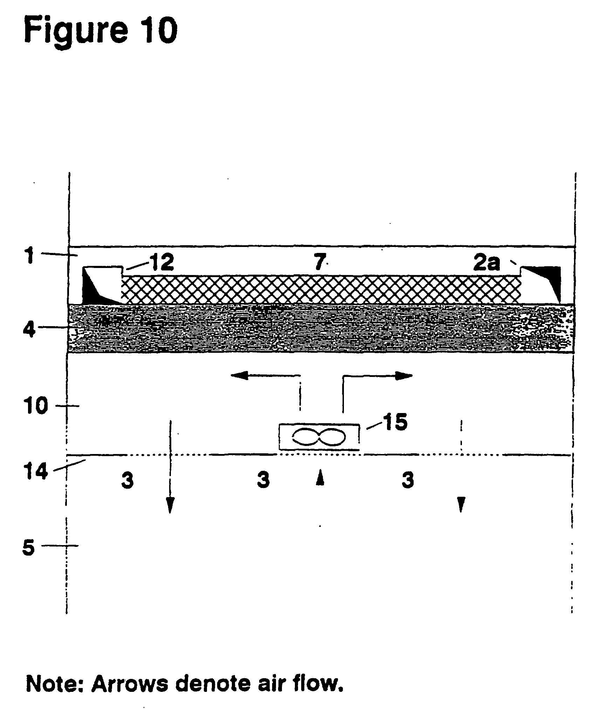

One way of obtaining control over the cooling output from the bottom of the slab would be to install a false ceiling 14 in the interior space below as illustrated in Figure 10.

Local fans 15 may then be used to circulate air between the ceiling void 10 and the interior space 5 via grilles 3 when cooling is required. Alternatively, heat transfer at the bottom surface of the slab may be increased by circulating fans located in the interior space below blowing air onto the exposed surface. Both of these approaches have the added benefit of increasing air movement within the space.

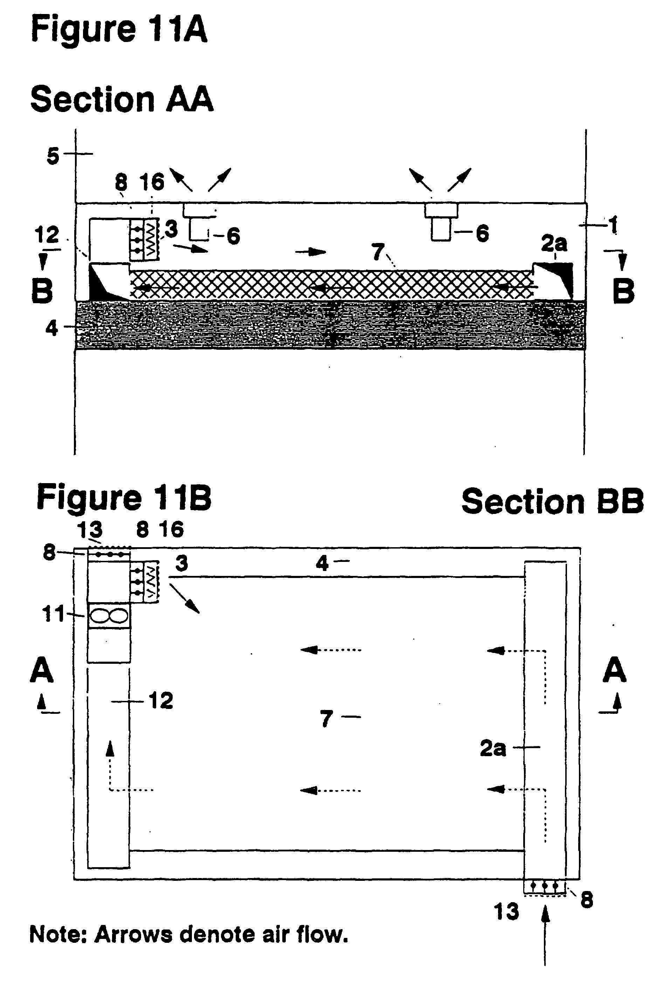

Figure 11 illustrates an embodiment of the invention which is a variation on the dedicated night cooling system which incorporates air circulation into the occupied space to facilitate control over when the cooling is used. At night, the dampers are configured as shown in Figure 11 to circulate air under the sheeting to cool the slab. The air is then discharged without entering the occupied space. During the day the dampers are configured to supply air into the occupied space after passing under the sheeting from where it is extracted by some other means (not shown). In this case cooling charging and discharging are both via the top surface of the slab. The consequent need for a filter 16 and the standard of filtration required will vary from installation to installation.

In Figure 11 the system is shown in its simplest form and, as such, would normally only operate during the day when cooling is required. However, a bypass may be incorporated between the supply duct 2a and the extract duct 12 using a control damper arrangement to enable the system to provide general ventilation as well. A heater battery may also be incorporated within the system to temper the air.

The invention may also be used in a similar manner in applications where some or all of the air is recirculated within the building rather than being introduced from outside. This is particularly appropriate where heating energy or cooling energy generated by mechanical means is to be stored. The use of recirculated rather than outside air will reduce the filtration requirement and hence save energy consumption.

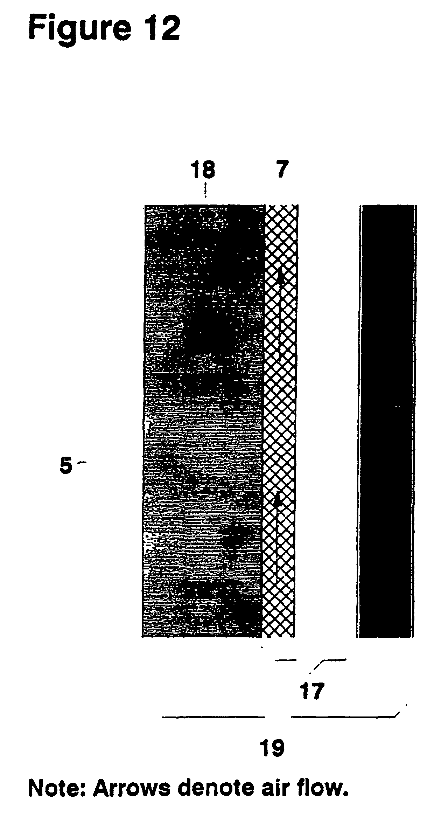

In addition to floor and ceiling surfaces, the non-structural element may be applied to other structural elements within a building including walls. In one such application a layer of sheeting is provided within a wall cavity 17 to cool the inner leaf 18 of an external wall 19 as illustrated in Figure 12.

The space requirement of this and the other arrangements that have been described are very small, with the thickness of the air path being typically of the order of 50 mm. This makes the described arrangements suitable for retrofit purposes. Furthermore, these arrangements may be used in conjunction with conventional natural ventilation, mechanical ventilation or air conditioning systems.

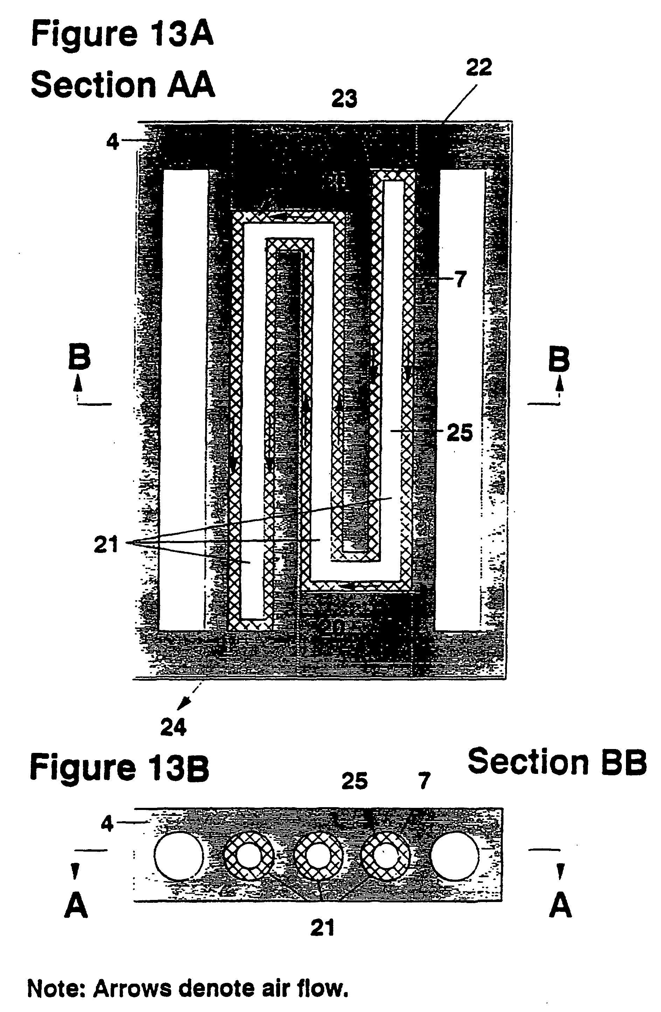

Similar non-structural elements to those already described may also be used to improve the performance of systems which store energy by circulating air through hollow cores within the building fabric such as that described in GB-A-2,208,922. Such arrangements do not fall within the scope of the invention, but are described here because they serve to illustrate physical principles by which the invention operates. In this system, which is shown schematically in Figure 13, a single continuous air path is created within a slab 4 by forming bends 20 to interconnect three elongate cores 21 in series. Heat exchange takes place between the air and the concrete slab as the air passes through the cores. Air enters the cores via entry holes 22, 23 and leaves by way of an exit hole 24 each of which is formed in the top or bottom of the slab. The remaining two cores are not used.

In such a system the non-structural element 7 may be used in a tubular form as indicated in Figure 13 and thereby define a duct 25 within the cores. Profiling is preferably provided on the outer surface of the duct to enhance heat transfer between the air and the concrete. Spiralling protrusions are particularly appropriate for this application to produce a "corkscrew" type of air motion.

When charging/discharging heat, the air is passed between the duct and the concrete surface as indicated in Figure 13. When storing heating or cooling energy, the air is diverted through the duct by a damper arrangement. In this way the non-structural element again insulates the air from the concrete slab. Modulation between these two extremes enables partial heat transfer.

In the above manner, it is possible to provide enhanced heat transfer between the air and the concrete as well as improved control over when that heat flow takes place. In the prior art design, high surface convective heat transfer coefficients were only achieved where the air flow changed direction, ie on entry, exit, and at the bends. By contrast, the coefficients along the straight lengths were fairly poor, and energy storage in the concrete in these areas was limited. The incorporation of a non-structural element in the manner described enhances the heat transfer along the straight lengths and improves the performance of the system.

Furthermore, the prior art method of controlling the heat exchange between the air and the concrete was described in GB-A-2,208,922 as relying on the use of two entry points as shown in Figure 13. When charging/discharging heat, air was introduced via the first entry point 22 and passed through all three air cores. When storing heating or cooling energy, the air was diverted by a damper arrangement to the second entry point 23, from where it passed through only the final core. This form of control enabled the heat exchange to be modulated down to approximately one third of full capacity. By contrast, arrangements as herein described have the potential to provide modulation between full capacity and zero.

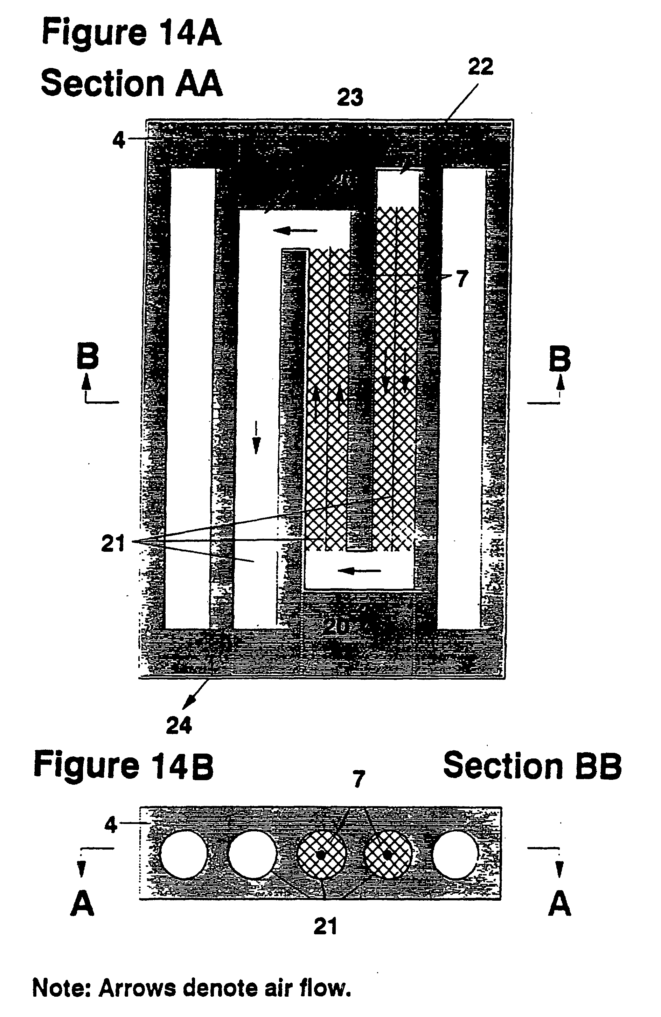

Clearly, the non-structural elements 7 may be installed in a form without a hollow core along the straight lengths in order to simply provide enhanced heat transfer between the air and the concrete as shown in Figure 14. If their use was restricted to the cores where the air flow is controlled - the first two in this case - the modulation achieved would represent an improvement over the approach of the prior art. Heat transfer in these cores would be increased in comparison with that in the final core over which there would be no control.

It will be apparent to those skilled in the art that the above ideas are applicable to all types of hollow core systems, including "once through" systems where air is passed through a single core only, and is not restricted to the example described.

The potential also exists for similar systems to be developed for steel based constructions, where the hollow cores may be formed by, for example, the steel decking. The present invention is equally applicable to such systems.

A number of embodiments of the present invention have been presented for illustrative purposes. The invention is not however, restricted to the examples described and many alternatives and variations are possible.

For example, in certain embodiments the structural element has been described as being formed of concrete. The invention however, may be applied equally to elements constructed of other materials, including brick and steel. Increasing interest is also being focused on the use of Phase Change Materials (PCMs) to store energy in buildings. Research is ongoing to develop wallboards, concrete blocks and the like which incorporate PCMs. The invention may be used to enhance and control heat flow between air and these materials. Accordingly, it will be apparent that the term "structural element" is not limited to those elements which are load bearing.

Likewise, the non-structural element, whether in the form of sheeting, tubing or some other shape, may be either rigid or flexible, whichever is appropriate to the application. In some cases it may also be load bearing. Accordingly, it will be apparent that the term "non-structural element" is not limited to those elements which are non load bearing. For the false floor embodiments flexible strips of sheeting are probably the most suitable for ease of installation. Most floor systems are constructed with supports spaced according to a 600 mm square grid. Strips of 600 mm wide sheeting may therefore be laid between the supports while sealing between adjacent strips and around the supports may be achieved by the use of ducting tape or some other sealing means. Fixing of the sheeting to the surface will be required if the weight of the sheeting is insufficient to prevent it being lifted by the pressure of the air underneath. This may be achieved by attachments to the floor supports.

Fixing will also be required for ceiling and wall applications. Here a more rigid construction may also be appropriate. Fixings which enable the sheeting to be demountable such as bolts or clips are generally preferred for maintenance purposes.

A flexible construction may be appropriate for hollow core applications, particularly where installation around bends is required.

The non-structural element may be formed of a variety of materials. The desirable attributes of any such material will generally include an ability to be formed with the necessary profiling to enhance heat transfer; thermal insulating properties to minimise heat losses in storage mode; and of course, low cost. The material should also be suitable for use in buildings, and should therefore not present a fire risk. Potential materials include PVC, expanded polystyrene and closed cell foamed plastics. Metals, wood or plasterboard could be used as backing materials where a degree of rigidity is required to assist with fixing. Cheap fillers such as aggregate may also be appropriate to add weight to the non-structural element and so minimise cost in floor-type applications by avoiding the need for fixings. Metal decking could be used to provide structural strength in load bearing applications.

The profiling and insulating properties could be provided by different materials in a composite construction. For example, profiled metal sheeting could be used in conjunction with an insulating material such as rock wool.

**Claims**

1. A building structure comprising at least one thermally massive structural first element of a first material, said structure defining at least one interior space separated from said first element by a false floor void, wall cavity or false ceiling void, said void or cavity being defined by a second element being a false floor, wall leaf or false ceiling respectively, the building structure being **characterised in that** it further comprises:

   a non-structural third element of a second material, the third element being located within said void or cavity at a surface of said first element to define a heat exchange air path therebetween; and
   means for selectively directing air along said path, the air, when so selected, being directed along said path either before or after passing into said interior space.

2. A building structure in accordance with claim 1, wherein said means for selectively directing air along said path includes means defining a second path for the passage of air either into or out of said interior space, and means for selectively directing at least a proportion of said air along said second path, said second path being thermally isolated from said first element.

3. A building structure in accordance with claim 2 and including means for mixing the air exiting from said first and second paths prior to the passing of said air into said interior space.

4. A building structure in accordance with claim 2 or claim 3, wherein said second path is in part defined by a surface of said third element remote from said first element.

5. A building structure in accordance with claim 4, wherein said third element is formed of or includes a material or materials having a lower thermal conductivity than the material from which the thermally massive structural element is formed.

6. A building structure in accordance with any preceding claim, wherein said means for selectively directing air along said heat exchange air path is adapted to direct sufficient air along said path such that the air passing into said interior space is of a predetermined temperature.

7. A building structure in accordance with any preceding claim, wherein profile means are provided on one or both of said first and third elements, said profile means extending generally transversely of said heat exchange air path to direct said air into thermal contact with said first element.

8. A building structure in accordance with claim 7, wherein said profile means are formed on a surface of said third element, said surface, in use, being disposed in face-to-face relationship with a surface of said first element and said profile means serving as separators between the two.

9. A building structure in accordance with any of claims 1 to 6, wherein an open matrix or similar filler is disposed along said heat exchange air path to increase the turbulence of the air directed therealong.

10. A building structure in accordance with any preceding claim, wherein one or more surfaces of the first element opposed to that at which the third element is located are thermally insulated.

11. A building structure in accordance with any preceding claim, wherein a further non-structural element is located at a surface of said first element opposed to that at which said second element is located, said further non-structural element defining with said first element a further heat exchange air path therebetween.

12. A building structure in accordance with claim 11, wherein heating and/or cooling energy is transferred to the first element by means of air directed along one of said first or further heat exchange air paths and extracted by means of air directed along the other of said heat exchange air paths.

13. A building structure in accordance with claim 11 or claim 12, wherein the air exiting from said further heat exchange air path is discharged without entering said interior space.

14. A building structure in accordance with any preceding claim, wherein the first element comprises at least a part of a wall, floor or ceiling of the interior space.

15. A building structure in accordance with any preceding claim, wherein the first element is thermally connected to the earth.

16. A building structure in accordance with any preceding claim, wherein said first element is formed from a material incorporating a phase change material or which is included in the list comprising concrete, brick and steel.

17. A building structure in accordance with any preceding claim, wherein said third element is formed of a material included in the list comprising PVC, expanded polystyrene, closed cell foamed plastics, metal, wood, plasterboard and rock wool.

18. A building structure in accordance with any preceding claim and including electrical, mechanical or fossil fuel based means for selectively raising or lowering the temperature of one or both of the first and third elements.

19. A method of controlling the temperature of an interior space defined by a building structure including at least one thermally massive structural first element, the interior space being separated from said first element by a false floor void, wall cavity or false ceiling void, said void or cavity being defined by a second element being a false floor, wall leaf or false ceiling respectively, the method comprising the steps of:

providing a non-structural third element in said void or cavity at a surface of said first element so as to define a heat exchange air path therebetween; and selectively directing air along said path either before or after passing the air into said interior space.

20. A method in accordance with claim 19 and comprising the additional steps of providing a second path for the passage of air either into or out of said interior space, said second path being thermally isolated from said thermally massive structural first element, and selectively directing at least a proportion of said air along said second path.

**Patentansprüche**

1. Bauwerksstruktur, umfassend wenigstens ein thermisch massives strukturelles erstes Element aus einem ersten Material, wobei die Struktur wenigstens einen Innenraum begrenzt, der von dem ersten Element getrennt ist durch einen Zwischenbodenhohlraum, eine Wandkavität oder einen Zwischendeckenhohlraum, wobei der Hohlraum oder die Kavität durch ein zweites Element begrenzt ist, welches ein Zwischenboden, ein Wandelement bzw. eine Zwischendecke ist, wobei die Bauwerksstruktur **dadurch gekennzeichnet ist, daß** diese ferner umfaßt:

ein nicht-strukturelles drittes Element aus einem zweiten Material, wobei das dritte Element in dem Hohlraum oder der Kavität an einer Oberfläche des ersten Elements angeordnet ist, um einen Wärmeaustauschluftweg dazwischen zu begrenzen; und

Mittel zum selektiven Richten von Luft entlang dem Weg, wobei die Luft, wenn so selektiert, entlang dem Weg gerichtet wird entweder vor oder nach einem Passieren in den Innenraum.

2. Bauwerksstruktur nach Anspruch 1, wobei die Mittel zum selektiven Richten von Luft entlang dem Weg Mittel aufweisen, die einen zweiten Weg für das Passieren von Luft entweder in den Innenraum hinein oder aus dem Innenraum heraus begrenzen, sowie Mittel aufweisen, um selektiv wenigstens einen Anteil der Luft entlang dem zweiten Weg zu richten, wobei der zweite Weg von dem ersten Element thermisch isoliert ist.

3. Bauwerksstruktur nach Anspruch 2 und mit Mitteln zum Mischen der von den ersten und zweiten Wegen austretenden Luft vor dem Passieren der Luft in den Innenraum.

4. Bauwerksstruktur nach Anspruch 2 oder Anspruch 3, wobei der zweite Weg zum Teil begrenzt ist durch eine Oberfläche des dritten Elements, welche von dem ersten Element beabstandet ist.

5. Bauwerksstruktur nach Anspruch 4, wobei das dritte Element aus einem Material oder aus Materialien gebildet ist oder ein Material oder Materialien aufweist, die eine niedrigere thermische Leitfähigkeit aufweisen als das Material, aus welchem das thermisch massive strukturelle Element gebildet ist.

6. Bauwerksstruktur nach einem vorangehenden Anspruch, wobei die Mittel zum selektiven Richten von Luft entlang dem Wärmeaustauschluftweg dazu ausgebildet sind, ausreichend Luft entlang dem Weg zu richten, derart, daß die in den Innenraum passierende Luft eine vorbestimmte Temperatur besitzt.

7. Bauwerksstruktur nach einem vorangehenden Anspruch, wobei Profilmittel an den ersten und/oder dritten Elementen vorgesehen sind, wobei die Profilmittel sich im allgemeinen transversal zu dem Wärmeaustauschluftweg erstrecken, um die Luft in thermischen Kontakt mit dem ersten Element zu richten.

8. Bauwerksstruktur nach Anspruch 7, wobei die Profilmittel an einer Oberfläche des dritten Elements ausgebildet sind, wobei die Oberfläche bei Gebrauch in einer gegenüberliegenden Beziehung zu einer Oberfläche des ersten Elements angeordnet ist und die Profilmittel als Trennmittel zwischen den beiden dienen.

9. Bauwerksstruktur nach einem der Ansprüche 1 bis 6, wobei eine offene Matrix oder ein ähnliches Füllmittel entlang dem Wärmeaustauschluftweg angeordnet ist, um die Turbulenz der dort entlang gerichteten Luft zu erhöhen.

10. Bauwerksstruktur nach einem vorangehenden Anspruch, wobei eine oder mehrere Oberflächen des ersten Elements, die entgegengesetzt zu derjenigen sind, an welcher das dritte Element angeordnet ist, thermisch isoliert sind.

11. Bauwerksstruktur nach einem vorangehenden Anspruch, wobei ein weiteres nicht-strukturelles Element an einer Oberfläche des ersten Elements angeordnet ist, die entgegengesetzt zu derjenigen ist, an welcher das zweite Element angeordnet ist, wobei das weitere nicht-strukturelle Element mit dem ersten Element einen weiteren Wärmeaustauschluftweg dazwischen begrenzt.

12. Bauwerksstruktur nach Anspruch 11, wobei Heiz- und/oder Kühlenergie zu dem ersten Element übertragen wird, indem Luft entlang einem der ersten oder weiteren Wärmeaustauschluftwege gerichtet wird, und extrahiert wird, indem Luft entlang dem anderen der Wärmeaustauschluftwege gerichtet wird.

13. Bauwerksstruktur nach Anspruch 11 oder Anspruch 12, wobei die von dem weiteren Wärmeaustauschluftweg austretende Luft ausgelassen wird ohne in den Innenraum einzutreten.

14. Bauwerksstruktur nach einem vorangehenden Anspruch, wobei das erste Element wenigstens einen Teil einer Wand, eines Bodens oder einer Decke des Innenraums umfaßt.

15. Bauwerksstruktur nach einem vorangehenden Anspruch, wobei das erste Element thermisch mit der Erde verbunden ist.

16. Bauwerksstruktur nach einem vorangehenden Anspruch, wobei das erste Element aus einem Material gebildet ist, welches ein Phasenumwandlungsmaterial enthält oder welches in der Liste umfassend Beton, Mauerstein und Stahl enthalten ist.

17. Bauwerksstruktur nach einem vorangehenden Anspruch, wobei das dritte Element aus einem Material gebildet ist, welches enthalten ist in der Liste umfassend PVC, geschäumtes Polystyrol, geschlossenzelliger Schaumkunststoff, Metall, Holz, Gipsplatte und Steinwolle.

18. Bauwerksstruktur nach einem vorangehenden Anspruch und mit elektrischen, mechanischen oder auf fossilem Kraftstoff basierenden Mitteln zum selektiven Erhöhen oder Verringern der Temperatur der ersten und/oder dritten Elemente.

19. Verfahren zum Steuern der Temperatur eines durch eine Bauwerksstruktur begrenzten Innenraums, die wenigstens ein thermisch massives strukturelles erstes Element aufweist, wobei der Innenraum von dem ersten Element getrennt ist durch einen Zwischenbodenhohlraum, eine Wandkavität oder einen Zwischendeckenhohlraum, wobei der Hohlraum oder die Kavität durch ein zweites Element begrenzt ist, welches ein Zwischenboden, ein Wandelement bzw. eine Zwischendecke ist, wobei das Verfahren die Schritte umfaßt:

Bereitstellen eines nicht-strukturellen dritten Elements in dem Hohlraum oder der Kavität an einer Oberfläche des ersten Elements, derart, daß ein Wärmeaustauschluftweg dazwischen begrenzt wird; und

selektives Richten von Luft entlang dem Weg entweder vor oder nach einem Passieren der Luft in den Innenraum.

**20.** Verfahren nach Anspruch 19 und umfassend die zusätzlichen Schritte eines Bereitstellens eines zweiten Wegs für das Passieren von Luft entweder in den Innenraum hinein oder aus dem Innenraum heraus, wobei der zweite Weg von dem thermisch massiven strukturellen ersten Element thermisch isoliert ist, und eines selektiven Richtens wenigstens eines Anteils der Luft entlang dem zweiten Weg.

## Revendications

**1.** Structure de bâtiment comprenant au moins un premier élément structurel massif thermiquement d'un premier matériau, ladite structure définissant au moins un espace intérieur séparé dudit premier élément par un vide de faux plancher, une cavité de mur ou un vide de faux plafond, ledit vide ou ladite cavité étant défini(e) par un deuxième élément formant un faux plancher, un entourage de mur ou un faux plafond respectivement, la structure de bâtiment étant **caractérisée en ce qu'**elle comprend également :

un troisième élément non-structurel d'un deuxième matériau, le troisième élément étant situé au sein dudit vide ou de ladite cavité à une surface dudit premier élément pour définir un passage d'air d'échange de chaleur entre eux ; et

un moyen pour diriger sélectivement de l'air le long dudit passage, l'air, lorsqu'il est ainsi sélectionné, étant dirigé le long dudit passage soit avant, soit après être passé dans ledit espace intérieur.

**2.** Structure de bâtiment selon la revendication 1, dans laquelle ledit moyen pour diriger sélectivement l'air le long dudit passage comprend un moyen définissant un deuxième passage pour l'entrée d'air dans ledit espace intérieur ou la sortie d'air dudit espace, et un moyen pour diriger sélectivement au moins une proportion dudit air le long dudit deuxième passage, ledit deuxième passage étant isolé thermiquement dudit premier élément.

**3.** Structure de bâtiment selon la revendication 2 et comprenant un moyen pour mélanger l'air sortant desdits premier et deuxième passages avant que ledit air pénètre dans ledit espace intérieur.

**4.** Structure de bâtiment selon la revendication 2 ou la revendication 3, dans laquelle ledit deuxième passage est en partie défini par une surface dudit troisième élément loin dudit premier élément.

**5.** Structure de bâtiment selon la revendication 4, dans laquelle ledit troisième élément est constitué de, ou comprend, un matériau ou des matériaux ayant une conductivité thermique inférieure à celle du matériau dont l'élément structurel massif thermiquement est fait.

**6.** Structure de bâtiment selon l'une quelconque des revendications précédentes, dans laquelle ledit moyen pour diriger sélectivement l'air le long dudit passage d'air d'échange de chaleur est adapté à diriger suffisamment d'air le long dudit passage de manière que l'air pénétrant dans ledit espace intérieur ait une température prédéterminée.

**7.** Structure de bâtiment selon l'une quelconque des revendications précédentes, dans laquelle des profilés sont prévus sur ledit premier élément ou ledit troisième élément, ou les deux, lesdits profilés s'étendant généralement transversalement audit passage d'air d'échange de chaleur pour diriger ledit air en contact thermique avec ledit premier élément.

**8.** Structure de bâtiment selon la revendication 7, dans laquelle lesdits profilés sont formés sur une surface dudit troisième élément, ladite surface, à l'utilisation, étant disposée en une relation de face à face avec une surface dudit premier élément et lesdits profilés servant de séparateurs entre les deux.

**9.** Structure de bâtiment selon l'une quelconque des revendications 1 à 6, dans laquelle une matrice ouverte ou une matière de remplissage similaire est disposée le long dudit passage d'air d'échange de chaleur pour augmenter la turbulence de l'air dirigé le long de celui-ci.

**10.** Structure de bâtiment selon l'une quelconque des revendications précédentes, dans laquelle une surface ou plusieurs surfaces du premier élément en face de celle où le troisième élément est situé sont isolées thermiquement.

**11.** Structure de bâtiment selon l'une quelconque des revendications précédentes, dans laquelle un élément non-structurel supplémentaire est situé à une surface dudit premier élément en face de celle où ledit deuxième élément est situé, ledit élément non-structurel supplémentaire définissant avec ledit premier élément un passage d'air d'échange de chaleur supplémentaire entre eux.

**12.** Structure de bâtiment selon la revendication 11, dans laquelle une énergie de chauffage et/ou refroidissement est transférée jusqu'au premier élément au moyen d'air dirigé le long d'un desdits passages d'air d'échange de chaleur parmi le premier passage d'air d'échange de chaleur et le passage d'air d'échange de chaleur supplémentaire et extraite au moyen d'air dirigé le long de l'autre desdits passages d'air d'échange de chaleur.

**13.** Structure de bâtiment selon la revendication 11 ou la revendication 12, dans laquelle l'air sortant dudit passage d'air d'échange de chaleur supplémentaire est déchargé sans pénétrer dans ledit espace intérieur.

**14.** Structure de bâtiment selon l'une quelconque des revendications précédentes, dans laquelle le premier élément comprend au moins une partie d'un mur, d'un plancher ou d'un plafond de l'espace intérieur.

**15.** Structure de bâtiment selon l'une quelconque des revendications précédentes, dans laquelle le premier élément est relié thermiquement à la terre.

**16.** Structure de bâtiment selon l'une quelconque des revendications précédentes, dans laquelle ledit premier élément est constitué d'un matériau englobant un matériau d'accumulation ou qui fait partie du groupe comprenant le béton, la brique et l'acier.

**17.** Structure de bâtiment selon l'une quelconque des revendications précédentes, dans laquelle ledit troisième élément est constitué d'un matériau faisant partie du groupe comprenant le PVC, le polystyrène expansé, le plastique mousse à alvéoles fermés, le métal, le bois, la plaque de plâtre et la laine de roche.

**18.** Structure de bâtiment selon l'une quelconque des revendications précédentes et comprenant un moyen à base de combustible fossile, mécanique ou électrique pour augmenter ou diminuer sélectivement la température du premier ou du troisième élément, ou des deux.

**19.** Procédé pour contrôler la température d'un espace intérieur défini par une structure de bâtiment comprenant au moins un premier élément structurel massif thermiquement, l'espace intérieur étant séparé dudit premier élément par un vide de faux plancher, une cavité de mur ou un vide de faux plafond, ledit vide ou ladite cavité étant défini(e) par un deuxième élément formant un faux plancher, un entourage de mur ou un faux plafond respectivement, le procédé comprenant les phases consistant à :

prévoir un troisième élément non-structurel dans ledit vide ou ladite cavité à une surface dudit premier élément de manière à définir un passage d'air d'échange de chaleur entre eux ; et diriger sélectivement de l'air le long dudit passage soit avant, soit après que l'air passe dans ledit espace intérieur.

**20.** Procédé selon la revendication 19 et comprenant les phases supplémentaires consistant à prévoir un deuxième passage pour l'entrée d'air dans ledit espace intérieur ou la sortie d'air dudit espace intérieur, ledit deuxième passage étant isolé thermiquement dudit premier élément structurel massif thermiquement, et diriger sélectivement au moins une proportion dudit air le long dudit deuxième passage.

# Figure 1

Note: Arrows denote air flow.

# Figure 2 A

# Section AA

# Figure 2 B

# Section BB

Note: Arrows denote air flow.

# Figure 3A

## Section AA

# Figure 3B
## Section BB

# Figure 3C
## Section CC

**Note: Arrows denote air flow.**

# Figure 4 A

## Section AA

7

B

C

4

## Figure 4B
## Section BB

A

## Figure 4C
## Section CC

A

Note: Arrows denote air flow.

# Figure 5A

# Section AA

# Figure 5 B

# Section BB

**Note: Arrows denote air flow.**

# Figure 6A

# Section AA

# Figure 6B

# Section BB

Note: Arrows denote air flow.

# Figure 7A

## Section AA

# Figure 7B

## Section BB

Note: Arrows denote air flow.

# Figure 8A
## Section AA

# Figure 8 B

## Section BB

Note: Arrows denote air flow.

# Figure 9A

## Section AA

# Figure 9B

## Section BB

Note: Arrows denote air flow.

# Figure 10

**Note: Arrows denote air flow.**

# Figure 11A

## Section AA

# Figure 11B

## Section BB

**Note: Arrows denote air flow.**

# Figure 12

Note: Arrows denote air flow.

# Figure 13A
# Section AA

# Figure 13B

Section BB

Note: Arrows denote air flow.

# Figure 14A
## Section AA

# Figure 14B

Section BB

**Note: Arrows denote air flow.**